# EUROPEAN PATENT APPLICATION

(11) **EP 1 835 307 A1**
(43) Date of publication of application: **19.09.2007**
(21) Application number: 06005163.8
(22) Date of filing: 14.03.2006
(51) Int. Cl.: G01T 1/00, G01T 1/17, G01T 1/29, G01T 5/08, G02B 6/00, H01J 37/244, H01J 47/20

(54) **Segmented electrical or optical delay line with interleaved tap for 3D image device readout**

(71) Applicant: PAUL SCHERRER INSTITUT, 5232 Villigen PSI (CH)
(72) Inventor: Gerber, Thomas, CH-5330 Zurzach (CH)
(74) Representative: Fischer, Michael

(57) **Abstract**

It is the aim of the present invention to provide a single-event imaging device fulfilling the specific needs in terms of high spatial and time resolution and high framing rates.

This aim is achieved according to the present invention by a single event imaging device, comprising:
a) at least one delay line (DL) assigned to an image plane (IP); said delay line (DL) allowing two pulses to propagate in opposite directions along the delay line (DL), said two pulses being generated by the impingement of the single-event (e⁻, hν) at an impingement position;
b) a number of interleaved measurement points (MP1 to MPn) associated with said delay line (DL); said interleaved measurement points (MP1 to MPn) dividing the delay line (DL) into a number of delay line segments (DL1 to DLn); and
c) a number of Time-to-Digital convertors (TDC₁to TDCₙ) to detect the arrival time of the pulses at distinct measurement points (MP1 to MPn).

Using the delay line in a segmented manner by disposing various interleaved measurement points along the delay line allows to eliminate any distortions incurred by edge effects while simultaneously obtaining the advantage of a shortened delay line in form of logically separated delay line segments allowing an excellent trade-off in terms of spatial resolution and framing rate.

## Description

The present invention relates to a single event imaging device, comprising at least one delay line assigned to an image plane; said delay line allowing two pulses to propagate in opposite directions along the delay line, said two pulses being generated by the impingement of the single-event at an impingement position.

For the 2-dimensional capture of data in particle physics, astronomy, life science etc., a variety of dedicated cameras are available. Apart from technical details most of these cameras are used in a "photographical imaging" - mode, i,e., in the same mode as the cameras in everybody's use. In "photographical" imaging we are merely interested in how many photons hit a spot on the image plane (e.g. the film plane), In applications were not light but particles impinge on a plane (the primary image plane), the particle "image" first has to be converted to a photon "image" which in turn is photographed. Today most often CCD cameras are used for this purpose. They provide a readily available digital frame output that can be viewed immediately after image capturing. In photography we are usually not interested, when each photon hits the image plane, at least not on the nanosecond scale. It is sufficient to know when the picture was taken and how long it integrated impinging photons.

However, for coincidence measurements, it is essential, to know the arrival time of each single photon or particle. Cameras that provide this discrete time information, besides the readily available spatial event distribution, are called "Three-Dimensional" (3D)-cameras. 3D-cameras are an emerging issue and can not simply be realized as an upgrade of existing camera types. The time information of events can, in general, only be monitored by capturing and dating a full image for every single event. That is, for dating an event occurring at coordinates X,Y one has to readout the full image, say, a few million pixels, just to note that one pixel contains the desired information. The time needed for a full image readout, however, is often too long (typical ms, in special cases µs). The main object here is to shorten that time by reading just a few pixel, the only pixels carrying information other than zero. Most experiments involving coincidence measurements of ions and electrons or experiments involving single photon detection and ranging use cameras employing a charge division or delay line readout. Types of such cameras are commercially available e.g. with the firms RoentDec Handels GmbH and Photek UK. Much development effort is currently undertaken to improve fast framing cameras for delicate measurements in dedicated situations.

A range of "Pixel"-cameras are currently developed, especially for X-ray imaging, at the Paul Scherrer Institute (PSI), located at 5232 Villigen PSI, Switzerland. Some PSI-pixel-cameras realize full instrumentation with an elegant lithographic technique. With the "Pilatus" Camera every pixel has its own counter. However the instrumentation is not complete for 3D-imaging. The count numbers are stored on chip in a circuit attached to every pixel. After an exposure period the stored counts are read out, what takes some time. Though the framing rate of this Pixel camera is much faster than a common CCD's readout, it is too slow to perform a readout every time a pixel received an event. On the other hand, if several counts are acquired before a framing is performed, the information about arrival time of the single events is lost.

The development aim of most PSI cameras is to accurately count events arriving on each pixel, thus providing an extreme dynamic range. However, the history of single events are not captured nor are the cameras optimized for ultra fast readout, i.e. framing.

Another fully instrumented PSI camera provides dating within 10 ns and an equivalent framing rate of up to 10 NHZ. However, the spatial and temporal resolution of 100 µm x 150 µm and 10 ns, respectively, does not fully meet the envisaged requirements in dedicated situations. The camera comprises a CMOS chip that could be used as readout for a 3D-camera. With 4000 pixels on a 8 x 8 mm² area (pixel size 100 µm x 150 µm) the chip achieves a time tagged event counting of up to 100 MHz (clock). Coordinates, time tag (within a time bin of 10 ns) together with an analogue charge signal (100 e⁻ ... 20 000 e⁻) are stored in the pixels own circuits. Data can be read from the pixel continuously with a rate of one sixth of the clock rate (clock MHz/6) -10 MHZ. The useful effective framing rate, in terms defined above, is thus limited to about 10 MHz. 16 modules are seamlessly assembled to a 2 X 8 array that again can be seamlessly assembled to bigger units.

For coincidence measurements in the context of mass spectrometry, the chip described above had to be modified and should be paired with a suitable image converter. An optimized system could then provide a 3D-imaging with 10 ns time and 150 µm spatial resolution, thus matching some of our applications requirements. However, the development of a suited CMOS-chip coupled to an Micro-Channel-Plate (MCP)-image converter is a project running over a few years. In contrast to this, the design aim of the here envisaged camera incorporating a delay line readout is a 1 ns time- and 30 µm spatial-resolution, requirements reaching beyond the limits of current CMOS-techniques.

Currently, it is the intention to realize 3D- cameras based on a delay line readout rather than lithographic readout circuitry for this specific applications. The delay line technique showed up to now the highest potential for very fast event imaging. As a start point we can take the camera provided by the firm RoentDec. Cameras incorporating a delay line readout hinge on fast electronics. Heart of such cameras is a set of fast TDC's (Time to Digital Converters) with high time resolution and high pulse pair resolution. The TDC should also provide a fast reset capability (wrap around speed) to enable in due time a subsequent measurement. TDC 's with such characteristics are commercially available.

In order to simplify the following description the following definitions are made:
**Event:** A particle or a photon impinging on a defined plane, the primary image plane, (e. g. a photon hitting the film plane in a photographic camera). The event is to be described by the locus and the time where and when it hits the plane. **Image:** An image is denoted as a distribution of events arriving at the image plane. An image is defined by the amount of events that arrive within a time period At in every point with coordinates X and Y. It is continued to call an image an "image" even if it contains just one single bright spot, i.e., the image of one event.
**Exposure time:** Time interval Δt during which events are captured.
**Pixel.** Picture element. Detectors and some realizations of image conversion devices exhibit a limited spatial resolution. A Micro Channel Plate (MCP), e.g., multiplies electrons "billiarding" along an array of narrow channels. The diameter of the MCP-channels, e.g. 16 µm, limits determination of event coordinates to the width of one channel. Events falling within a 16µm wide area can not be distinguished and thus contribute to one point in the "pixelated" image.
**Date or Time Tag:** In "photographical" applications it generally suffices to protocol the time, when a picture was taken, i.e. at what time the exposure time Δt occurred. In coincidence measurements the temporal relation between events, or the date of every single event, matters.
**Image conversion:** Techniques that convert an image in the image plane to a secondary image that can be captured by a suitable detector. There are no direct detection schemes that convert a single ion arriving at modest energies into an unambiguously exploitable electrical signal. Image conversion therefore comprises in many cases some kind of amplification mechanism that converts each event to a number of secondary events, e.g. to electrons that can be collected on an anode array producing a signal amenable to further electronic processing. In optimal arrangements all the information of the primary image is contained in the secondary image.
**Detector:** A device that transforms primary or secondary events to an electrical charge that gives rise to an electrical signal suited for further processing (e.g. CCD chip, multianode photmultiplier, MCP-multianode- combination etc.). The minimal charge that can typically be processed, is a few hundreds of electrons, 10 ⁻¹⁷ C, However, for fast processing a much higher charge has to be collected as the gain-bandwidth of electronic amplifiers is limited. For applications envisaged here, typically the charge of 1.0⁶ electrons (0.1 pC) have to be collected on a pixel. Image converters thus have to provide an amplification of about 10⁶. For 3D-imaging, the signals of all pixel have to be collected in parallel or sequentially and registered together with their pixel-coordinate and their acquisition time.
**Frame:** Evaluation of detector signals, pixel by pixel, and presentation of the results in a form that can be visually inspected. The result of "imaging" is the frame that can be viewed on a display, printed on paper or, in its electronic form, be manipulated to produce the desired data. Latest in spatially resolved coincidence measurements it appears, that the difference between image and frame is of great concern). **3-dimensional imaging:** This rather vaguely used term denotes in the following an image consisting of events about which it is not only known their coordinates but also the time when they occurred. In other words, in addition to the number of events (in our context typically one or zero) falling on a particular pixel, also the event history is registered.

In view of the afore-mentioned drawbacks, it is the aim of the present invention to provide a single-event imaging device fulfilling the specific needs in terms of high spatial and time resolution and high framing rates.

This aim is achieved according to the present invention by a single event imaging device, comprising:
a) at least one delay line assigned to an image plane; said delay line allowing two pulses to propagate in opposite directions along the delay line, said two pulses being generated by the impingement of the single-event at an impingement position;
b) a number of interleaved measurement points associated with said delay line; said interleaved measurement points dividing the delay line into a number of delay line segments; and
c) a number of Time-to-Digital converters to detect the arrival of the pulses at distinct measurement points.

Using the delay line in a segmented manner by disposing various interleaved measurement points along the delay line allows to eliminate any distortions incurred by edge effects while simultaneously obtaining the advantage of a shortened delay line in form of logically separated delay line segments allowing an excellent trade-off in terms of spatial resolution and framing rate.

In one preferred embodiment said Time-to-Digital converters may logically be connected in a way that one of the two pulses arriving first at one of the two measurement points of a respective delay line segment will cause a start time event on the respective Time-to-Digital converter and the later arrival of the second pulse of the two pulses at the other measurement point of the respective delay line segment is detected at a respective Time-to-Digital Converter associated with said other measurement point to cause an arrival time event, whereby said start time event and the said arrival time event are used to determine the impingement position. Suitable methods for discrimination allow to eliminate the TDC signals referring to the same event since the original pulse generated by the event is thus seen by more than just the nearest TDC. One concept could play with an amplitude discrimination since the amplitude of the pulse decrease from measurement point to measurement point. Another concept (also combinable with the afore-mentioned) may use an evaluation step where a time tags that appear equidistant (time difference is an integer multiple of the delay of a segment) are rejected as replicas of an original point.

In a preferred embodiment of the present invention, the at least one delay line may be meander-shaped allowing to design the delay line as compact as possible since for example only the protruding reversements of the meander are not considered to form part of the image plane.

As an inherent drawback due to the physical fundamentals, the maximal framing rate is limited by the delay of the shortest possible segment. These size restraints can be eliminated by using several meander-shaped delay lines running parallel and sharing common measurement points. Width and length of all meanders can be chosen for optimal electronic readout conditions.

A further suitable exemplary embodiment may provide the delay line as an electron collecting anode. In order to provide an interface between in- and ex-vacuum components the delay line may be preferably a light guide comprising a fluorescent core material, such as rhodamine.

A preferred embodiment with respect to an optical delay line can provide a delay line being designed as a ribbon shaped strand having fibres with gradually different length. Additionally, the longest fibres may mark the middle of the ribbon shaped strand and the shortest fibres marking the edges of the ribbon shaped strand.

In order to manage edge effect and to avoid any distortions the strand may have the following properties: at one end of the strand the fibres are cut flush and half of the fibres are gathered to match a front face of a first photo-multiplier and the other half together with a half of the fibres of an adjacend strand are gathered to match a front of a second adjacent photo-multiplier, and wherein the fibres protruding differently far from the other end of the strand are bent in a way that the ends of all fibres of one strand are connected flush to a further photo-multiplier.

To get rid off any restrictions with respect of the resolution accuracy an image plane covered by at least one ribbon shaped strand is smaller than a difference in length between the shortest and the longest fibre of the ribbon shaped strand. Alternatively or even additionally, at least two delay lines are assigned to the image plan; said at least two delay lines being oriented under an angle to each other, preferably under a rectangular angle. This embodiment allows to combine the time difference measured in both dimension according to a set of two linear equations and numerically evaluated to yield exact X,Y coordinates. Again alternatively or even additionally to the two afore-mentioned options, an event time available as a signal pulse derived from an image converter is used to start the Time-to-Digital Converters and wherein the two pulses available at the ends of the delay line are registered as stop pulses. By evaluating the sum of the running time of the two pulses, the event position can be determinded.

Exemplary embodiments of the present invention are explained below referring to the following drawings:
- Figure 1: depicts the principle components of a camera system dedicated for electron, molecule and ion imaging in the context of mass spectrometry;
- Figure 2: illustrates three readout schemes a) to c) for a camera system as shown in Figure 1;
- Figure 3: schematically illustrates a meander-shaped delay line being partitioned by a number of interleaved measurement points and its associated Time-to-Digital converters;
- Figure 4: schematically illustrates the concept of an optical delay guiding light pulses through the core of a glass fibre filament;
- Figure 5: shows schematically an arrangement of ribbon-shaped strands of fibres realizing independence of delay length und covered image area.

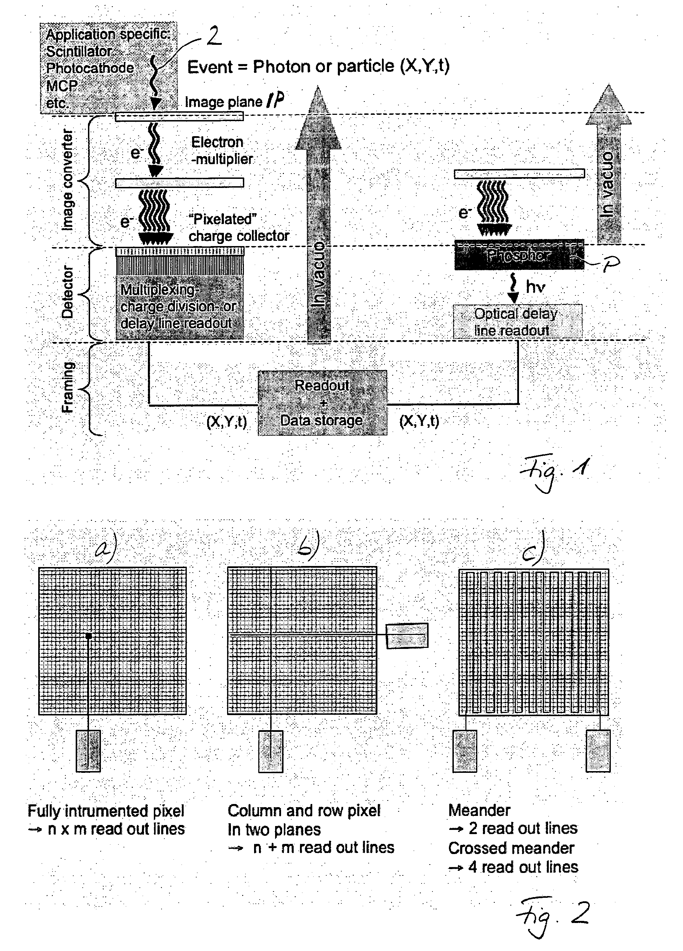

Figure 1 depicts the principle components of a camera system dedicated for electron, molecule and ion imaging in the context of mass spectrometry. In its minimal form an image made up of one event can be stored with 3 Bytes (X,Y,Time). Usually some more bytes are used for accuracy and protocol. Still, the image is described with less than 100 Bytes. The images spoken of in the following thus consists of a few bytes that can be stored at MHz rates.

In the following, the discussion is restricted on fast, so called 3-dimensional imaging, for which the framing speed of CCD's or equivalent read out components, is much too slow. Moreover, the images to be captured consist of only a few events and thus contain a minimal amount of information. The imaging device providing such information is accordingly called camera though in other context of single event counting and ranging one tends to the expression "position sensitive detector" (PSD). However, the term PSD is already used and commonly denotes specially arranged photodiodes, providing spatial information by charge division onto two or four separate anodes. Intrinsically these commercially available PSD are rather slow and cannot cope with 3D-cameras providing ultimately high framing rates.

For most 3D-cameras the detector and its readout system limits the framing speed. Below the function principle of a fast detector incorporating a delay line readout will be explained. Improved readout arrangements will then be described as a variation of the delay line principle. All proposed detectors of this kind necessitate an image converter with a gain factor of about 10⁶. Suitable image converters, e.g. MCP assemblies providing the desired number of secondary electrons, are available and will not be discussed further. The main subject thus is the "pixelated" detector and the readout system.

The aim is to realize a 3D-camera with a framing rate in the order of several 10 MHz and an image size in the order of 100 x 100 mm². A 1 ns time- and 30 µm spatial-resolution is envisaged. With a special arrangement of delay lines the performance of existing cameras of this type can be speeded up. According to Fig.1 an image of a primary event 2 is converted to an image of secondary events, - clouds of electrons, that are collected on the detector. The electronic image thus consists of charges distributed on an array of anodes, the pixels of the detector. For framing the "charge"-image, the charge of every pixel has to be read out one by one. To register the instant when a particular pixel was charged, the readout of each pixel should get active right after the charge is accumulated. The signal provided by every pixel can then be stored together with a time mark defining the readout time. A straightforward way to accomplish this task, in times much shorter than 1 ms, is to equip each pixel with its own readout line. This approach is taken e.g. with large detectors in particle physics or in PET applications. A camera with every pixel fully instrumented is, however, hardly cost effective. Moreover, it is difficult to miniaturize such systems unless image converter, pixelated detector and associated circuitry can be manufactured lithographically on chip.

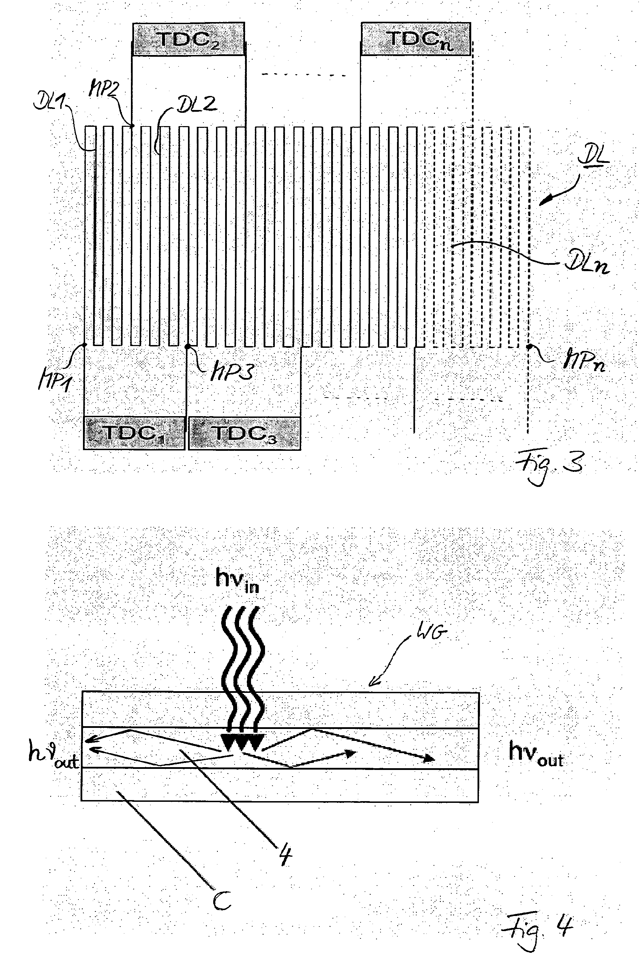

In Figure 2 the above described readout scheme is visualized (Fig. 2a) on the left). A pixelated detector with n rows and m columns needs n x m readout lines, that can be millions. A more effective method is sketch in the middle panel of Fig.2 b) - The pixels of the detector are arranged as row and column strips crossing the whole sensitive area. Reading out the n + m strips provides the coordinates of an event. The number of readout instruments can thus be greatly reduced n + m < n x m. Still, with n,m = 1000 the number of readout lines will exceed Common budgets. A compromise consists in sequentially reading out the n + m signals with two readout instruments (e.g. linear CCD arrays). Though the framing speed can be drastically increased a rate greater than 100000 frames/s is hardly achieved.

This method (middle panel of Fig.2.) corresponds to a projection of a 2D-image on two 1D-images. The right panel in Fig.2c) shows the principle of a delay line readout. Electrons impinging on a meander electrode, give rise to two charge pulses propagating with nearly the speed of light in opposite directions away from the hitting point. Let the pulse that arrives first at one end of the line start a counter (a TDC). The other pulse arriving at the other end of the line stops the counter, The number of counts is proportional to the time difference between the pulse arrivals. Knowing the propagation speed, the arrival time of the pulses thus provides the information about the position where the pulses were generated.

The technique is somewhat less straightforward than it appears at first sight. Propagation on an electric line occurs at the speed of light or slightly less depending on the dielectric material used between the conductors it is made of. If the charge is brought onto the line close to one of its ends the time difference τ is τ < l/c, with l and c being the total length of the line and the speed of light, respectively. For a meander with 2 loops/mm covering a sensitive area of 100 x 100 mm² the delay line has a length of 40 m. The time between pulses arriving at the ends of the line is thus maximally ∼ 120 ns. With currently available time measurement equipment, (25 ps being a lower limit for TDC) the time difference can not be evaluated with an accuracy high enough to determine the event position within better than about 10 mm along the delay line. However, while the pulses running along the meander do not indicate with sub-millimetre resolution where exactly the event has hit, it is still easy to measure on what specific meander loop the charge was received (Fig.2). The resolution in the direction the meander runs, say the x-direction, thus depends on the number of loops/Δx. With more than one loop/mm, sub-millimetre resolution is therefore readily achieved, - in the x - direction. The position in the direction y, orthogonal to x, can be gained by a second meander running in the y-direction. The arrangement of the two meander planes, one above the other without making contact, has to guarantee, that impinging electrons are about equally shared on both meanders.

If the charge cloud is spread out over several meander loops it is possible to obtain a spatial resolution much lower than the meander pitch (loops/mm). A cloud of electrons hitting a number of delay line loops gives rise to the same number of pulse-pairs running away from their points of birth. The pulses whose duration is given by the image converter are in general slow enough to pile up on each other forming two composite pulses propagating in opposite directions. The centroid of these composite pulses is representative of the centre of the impinging electron cloud which in turn is representative for the locus where the primary event hit the image converter. With pulse forming networks (Constant Fraction Discriminators, CFD) in combination with TDC's the centroid of the delay line signals can be determined with standard effort. A meander in the x-direction with 2 loops/mm and a y-width of 100 mm delays a pulse by around 1ns/mmₓ. With a realistic TDC time resolution of 100 ps a spatial resolution of < 100 µm can be obtained.

Actually, a realization of the above described detector is commercially available with the firm RoentDek (www.roentdek.com) and can be considered as state of the art. Framing rates of 1 MHz and spatial resolution in the order of 100 µm are achieved.

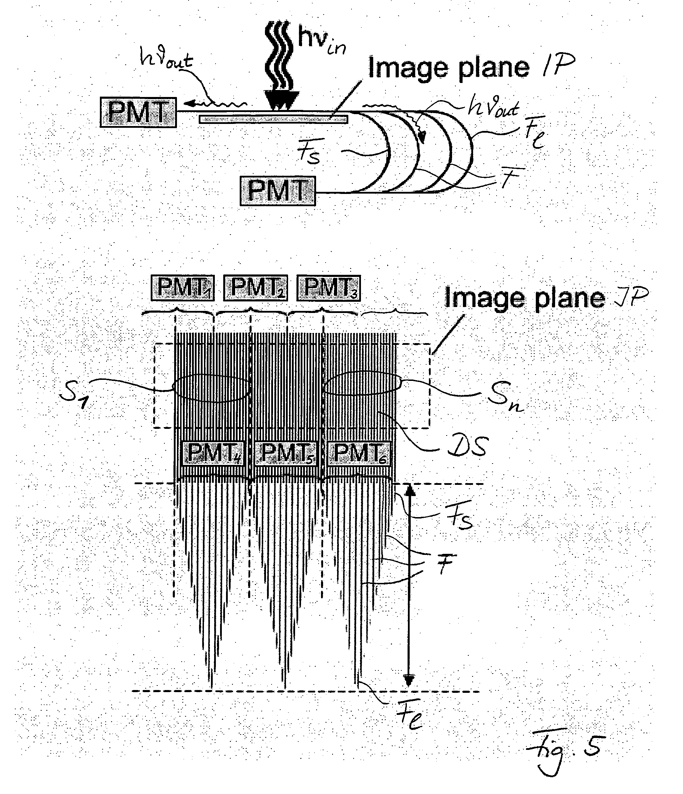

Using now a segmented delay line DL (Fig. 3) comprising sections DL1 to DLn restrictions on total delay time can be alleviated significantly. Measurement points MP1 to MPn are inserted repeatedly after a length of a segment DL1 to DLn of the delay line DL. The maximal time during which pulses run on the delay line DL until they activate the start and stop input of a Time-to-Digital converter, in the following referred to as TDC, can thus be chosen. By an interleaved arrangement of measurements points MP1 to MPn as indicated in Fig 3. distortions can be avoided. Wherever an event occurs, it hits the meander shaped delay line DL between two measurement points MP1 to MPn attached to one of the TDC's. Due to the interleaved TDC's arrangement there is no event falling on an "edge" of the delay line DL (except for the margins of the covered image plane IP). The measurement point MP1 to MPn nearest to the event will also start one of the TDC's. This TDC however will not receive a stop pulse. It has to be reset after an event has been captured at adjacent measurements points MP1 to MPn.

Electronically the introduction of intermediate measurement points MP1 to MPn along a common delay line DL is quite challenging. Each measurement point MP1 to MPn is a tap dividing the pulse into two: one pulse delivered to the TDC while the other pulse propagates further along the delay line, The original pulse generated by an event is thus seen by more than just the nearest TDC devices though the amplitude of the pulse decreases from tap to tap. Several strategies can be applied to circumvent this complication. One solution is to acquire all measurements on all activated TDC's. In an evaluation step all time tags that appear equidistant (multiples of the delay of a delay line segment DL1 to DLn) are rejected as replicas of an original point. Another concept could play with amplitude discrimination, accounting for the fact that pulse height diminishes from tap to tap. Either of the two concepts above can be optimized by a suitable choice of line impedance and tap impedance. However, the presence of pulse replicas in the measurement system may impede the evaluation of multi-hit events in some situations. If the measurement of pulses of one event temporally coincide with replica pulses of an event arriving elsewhere the measurement set up could no longer associate the two pulses properly. In many experimental arrangements the image converter can indicate the times when pulses arrive, - a valuable additional information. Correlating the history of event arrival with the pulses on the delay line will decide which multi-hit measurements can be evaluated and which one have to be rejected. Apart from this complication the arrangement just described, allows to increase the size of the image plane considerably without contribution to framing rate or spatial resolution. In the version shown in Fig.3 only one limit remains: The delay in one segment DL1 to DLn still depends on the meander width. It shall be mentioned that thereby also the length of all segments together have an effect since the total meander length corresponds to the width of the overlaid orthogonal meander, necessary for high spatial resolution in two dimensions. The maximal framing rate is thus limited by the delay of the shortest possible segment, i.e. one meander loop. In a realization the meander width and the number of loops in a segment have therefore to be traded off to meet the optimal delay time determined by the targeted spatial resolution and the time resolving capacity of the actually used TDC's devices.

The mentioned size restraints can be completely got rid of, if one envisages to use for each dimension x or y, several meanders running in parallel sharing common measurement points MP1 to MPn. **(Frage: Könnten Sie mir hierzu noch eine Figur nachliefern?**)Width and length of all meanders, and thereby delay length of each segment can then be chosen for optimal electronic readout conditions. Again no "edge effects" occur, due to interleaving the segments along the meander. Edge effects between adjacent parallel meanders do not occur though the pulses generated by an event are running on two parallel segments. The division of pulses on two segments corresponds to a charge division that is again unified when reaching the common measuring tap.

Actually, the delay line DL is another issue when it is realized as hybrid with wire pairs, as strips on an electronic board or lithographically. The relevant point is the segmentation of the delay line in all directions and the special arrangement of (interleaved) terminals from where the signals can be picked up.

Next, a readout comprising an optical delay line is explained in more detail. A camera with optical readout could be very rugged maintaining the same advantages as described above. Moreover, it is easier to manufacture and provides an interface between in- and ex-vacuum components with no signal carrying feed-throughs other than optical which might significantly alleviate the complexity of the experimental set-up.

Reverting now again to Fig. 1 (right side), the electrons from an image converter impinge on a phosphor P producing a "photon" image instead of being collected on a delay line anode. The phosphor P is applied to the front face of a fibre- or micro lens plate yielding an exact image of the phosphor emission on its back face. The plate itself has the function of a window separating the vacuum side (MCP electron multiplier image converters only work in vacuum) from ambient. By this means an unblurred secondary image appears at a plane accessible from ambient and can now be treated in any suitable way. Assemblies incorporating MCP's and phosphors providing the described function are commercially available. Phosphors with a decay time in the order of 1 ns, a prerequisite for fast image framing, are also commercially available.

The light emitted from the phosphor can be evaluated using a fibre optic delay line brought in close contact with the phosphor carrying plate. Unfortunalety, light falling transversely on a perfect optical fibre just traverses it and does not give rise to guided waves in its core. According to Fig. 4. light hνᵢₙ entering through a cladding C of a waveguide WG can, however, give rise to trapped light hνₒᵤₜ inside the waveguide WG if its core 4 consists of a fluorescent material. To have something in mind, a hollow core glass fibre filled with a dye, e.g., Rhodamine, is suitable. Blue light reaching the core 4 through the side (cladding C) will yield a red fluorescence in all directions. Part of the fluorescence is generated within angles fulfilling the waveguide conditions and will thus continue travelling along the waveguide WG. Glass fibres are expensive. For the application in a camera plastic fibres with fluorescing cores (like Rhodamine providing a fast fluorescence decay) can be more appropriate. Moreover, keeping in mind that a "lossy" waveguide (by inducing sharp bends or grinding the cladding down close to the core) not only looses guided light but can also couple light from outside into the core, the "side" coupling of light into a waveguide suited for application in 3D-imaging can be treated as solved.

With optical fibres a readout system is manufactured quite easily. Like in some of its electronic counterparts (Roentdek), a meander delay line is formed by simply wrapping an adequately prepared optical fibre around a flat body. The arrangement is equivalent to the one shown in Fig. 3. The main technical advantage of using fibres is twofold:
Due to their robustness it is easier to wind optical fibres than an electrical two-wire (Lechner)-line. For an increase of immunity in respect to rupture, the optical fibres can be embedded in a transparent material like e.g. an epoxy glue. The size of optical fibres (typically 125 µm) allow up to 8 meander loops/mm, affecting spatial resolution and delay line length per segment.

In addition to that, the main advantage of fibre readout arrangement is multi-hit capability. Events arriving on different segments can be measured independent of each other. There is no propagation of pulses beyond a segment as the light leaving the fibre end is fully absorbed on a photocathode of the corresponding PMT. Reflections or propagation into any fibre terminated at the PMT can be avoided by index matching fibre ends to the PMT window.

Coincidences can thus be registered even for particles arriving at the same instant, as long as they do not hit the same segment on both meander delay lines. In view of Time of Flight (TOF) experiments this condition will be fulfilled in most situations. In a multi-fragment coincidence experiment, fragments are distributed about the centre of gravity of the parent molecule or particle. In a situation where this centre of gravity moves towards the centre of the camera, fragments, will in general be distributed all over the image plane, thus hitting different segments. Only if, e.g. a two-body dissociation occurs along the line on which the centre of gravity moves, particles will hit the same spot. But in this case the fragments arrive at different times, that may be registered due to the multi-stop capability of a suited TDC. If, in other situations, on spot arrival of two events occurs within less than about 10 ns (pulse-pair resolution of a good TDC), the experiment might have to be rejected.

Comparing the fibre delay line with its electric version the termination of the fibre corresponds to a true zero-impedance tap. What is an advantage concerning multi-hit-capability turns out to be a disadvantage in terms of edge effects occurring between segments. A zero impedance matching of the taps corresponds to a complete decomposition of the camera into an array of single independent cameras, necessitating a correction for edge effects. In contrast to electrical-, optical delay lines can not only be interleaved but also interweaved: It is possible, due to the absence of insulating problems, to wind overlapping segments warranting that an event always falls fully within one segment. Apart from size considerations the advantage of optical fibres is also a complete absence of interferences between two interweaved lines whereas with electrical lines image charges would be induced.

As with electrical delay lines the optical waveguide length imposes size restraints unless segmentation in both dimensions x and y is employed. Seamless composition of two parallel optical guide meanders realized with fibres may find a limit due to the fact, that optical fibres can not be bent with very small radii.

Fig. 5 shows an arrangement of fibres F that realizes independence of delay length and covered image plane IP. Fibres F with gradually different lengths are arranged in a ribbon shaped strand S1 to Sn, the shortest fibres Fₛ marking the edge of the strand S, the longest fibre Fₗ running along the middle of the strand S. In the present example, one strand constitutes one detector segment DS. At one end of the strand S the fibres F are cut flush. Half of the ribbon fibres are gathered to match the front face of a photo-multiplier tube (PMT₁), the same for the other half that, together with half of the fibres from the next segment, are facing an adjacent PMT₂. The fibres protruding differently far from the other ribbon end are bent in a way that the ends of all fibres can be connected flush to a further PMT_{4, 5, 6}.

An event hitting the strand S within the imaging plane IP will provide two light pulses running towards the fibre ends, where they are detected by the corresponding PMT's. The time delay between the two pulses depends on the position where the ribbon shaped strand S1 to Sn has been hit. The time difference is minimal for an event falling on the border of the ribbon and maximal when hitting its middle. The PMT's attached to the side with unequal fibre lengths indicates which detector segment DS has been hit. The PMT's attached to the other, flush cut, ribbon end arbitrates on which segments halves of the strand S the event occurred. As in the cases above, two fibre arrays running in both directions x,y have to be superimposed to measure the X,Y-coordinates of an event.

In the case when an event hits close to the middle or close to the edge of a segment the signals of three PMT's have to be evaluated to determine the centre of mass of the generated pulses. Only if the centre of mass hits (within the achieved resolution) exactly on the middle or on the edge of a strand S1 to Sn, the two arbitrating signals on the corresponding end are of equal amplitude. Both signals deliver the same minimal (resp. maximal) time delay in respect to the pulse arriving at the common PMT on the other side. Thus, either signal can be evaluated to obtain a correct spatial information. If the event hits slightly off ribbon centre or ribbon edge, one of the arbitrating PMT signals is bigger than the other. The stronger signal carries the full information about the centre of mass of the light spot produced by an event on the detector. The evaluation logic has thus to warrant the capture of the strongest signals in discrimination of weaker signals measured on adjacent taps.

Unfortunately, the time difference measured in one detector segment DS also depends on the position of the arriving light spot along the ribbon. The sum of the times, the two pulses take to reach either ribbon end, is not constant but depends on the lateral position on the ribbon. This missing information can be restored in three ways:
The imaging plane is much smaller than the maximal difference between the shortest fibre Fₛ and the longest fibre Fₗ. (s. Fig.5). The dependence on the position along the ribbon length may then be neglected.
After determination which x- and y- segment has been hit, the time difference measured in both dimensions can be combined according to a set of two linear equations and numerically evaluated to yield exact X, Y coordinates.
The event time, available as a pulse derived from the MCP image converter is used to start all the TDC's. The two pulses available at the fibre ribbon ends are registered as stop pulses. The sum of the running time of the two pulses can then directly be read out.

All three possibilities do not slow down the readout rate as either none or only very rudimentary numerical operations after data logging are involved.

The advantage of the stranded delay line DL is thus independence of detector area and delay time. The delay time span in each segment is only dependent on the choice of the length difference between longest fibre Fₗ and shortest fibre Fₛ in a strand S1 to Sn. Edge effects do theoretically not occur, or can be treated with a simple and fast logic.

## Claims

1. A single event imaging device, comprising:
a) at least one delay line (DL) assigned to an image plane (IP); said delay line (DL) allowing two pulses to propagate in opposite directions along the delay line (DL), said two pulses being generated by the impingement of the single-event (e⁻, hν) at an impingement position;
b) a number of interleaved measurement points (MP1 to MPn) associated with said delay line (DL); said interleaved measurement points (MP1 to MPn) dividing the delay line (DL) into a number of delay line segments (DL1 to DLn); and
c) a number of Time-to-Digital convertors (TDC₁ to TDCₙ) to detect the arrival time of the pulses at distinct measurement points (MP1 to MPn).

2. The device according to claim 1, wherein said Time-to-Digital converters (TDC₁ to TDCₙ) are logically connected in a way that one of the two pulses arriving first at one of the two measurement points (MP1 to MPn) of a respective delay line segment (DL1 to DLn) will cause a start time event on the respective Time-to-Digital converter (TDC₁ to TDCₙ) and the later arrival of the second pulse of the two pulses at the other measurement point (MP1 to MPn) of the respective delay line segment (DL1 to DLn) is detected at a respective Time-to-Digital Converter (TDC₁ to TDCₙ) associated with said other measurement point (MP1 to MPn) to cause an arrival time event, whereby said start time event and the said arrival time event are used to determine the impingement position.

3. The device according to claim 1 or 2, wherein the at least one delay line (DL) is meander-shaped.

4. The device according to any of the preceding claims, wherein several meander-shaped delay lines (DL) are running parallel and sharing common measurement points (MP1 to MPn).

5. The device according to any of the claims 1 to 4, wherein the delay line (DL) is an electron collecting anode.

6. The device according to any of the claims 1 to 4, wherein the delay line (DL) is a light guide (WG) comprising a fluorescent core material (4).

7. The device according to claim 6, wherein the delay line (DL) is designed as a ribbon shaped strand (S1 to Sn) having fibres (F, Fₛ, Fₗ) with gradually different length.

8. The device according to claim 6 or 7, wherein the longest fibres (Fₗ) marking the middle of the ribbon shaped strand (S1 to Sn) and the shortest fibres (Fₛ) marking the edges of the ribbon shaped strand (S1 to Sn).

9. The device according to claim 7 or 8, wherein at one end of the strand (S1 to Sn) the fibres (F, Fₛ, Fₗ) are cut flush and half of the fibres (F, Fₛ, Fₗ) are gathered to match a front face of a first photo-multiplier (PMTₗ) and the other half together with a half of the fibres (F, Fₛ, Fₗ) of an adjacend strand (S1 to Sn) are gathered to match a front of a second photo-multiplier (PMT₂), and wherein the fibres (F, Fₛ, Fₗ) protruding differently far from the other end of the strand (S1 to Sn) are bent in a way that the ends of all fibres (F, Fₛ, Fₗ) of one strand (S1 to Sn) are connected flush to a further photo-multiplier (PMT).

10. The device according to claim 9, wherein an image plane (IP) covered by at least one ribbon shaped strand (S1 to Sn) is smaller than a difference in length between the shortest fibre (Fₛ) and the longest fibre (Fₗ) of the ribbon shaped strand (S1 to Sn) .

11. The device according to any of the preceding claims, wherein at least two delay lines (DL) are assigned to the image plan (IP); said at least two delay lines being oriented under an angle to each other, preferably under a rectangular angle.

12. The device according to any of the preceding claims, wherein an event time available as a signal pulse derived from an image converter is used to start the Time-to-Digital converters (TDC₁ to TDCₙ) and wherein the two pulses available at the ends of the delay line (DL) are registered as stop pulses.
